# EUROPEAN PATENT APPLICATION

(11) **EP 3 522 022 A1**
(43) Date of publication of application: **07.08.2019**
(21) Application number: 17856176.7
(22) Date of filing: 27.09.2017
(51) Int. Cl.: G06F 12/00, G06F 9/445

(54) **CLOUD SERVICE SYNCHRONIZATION PROGRAM AND CONNECTION PROGRAM**

(30) Priority: 27.09.2016 JP 2016188281
(71) Applicant: OPRO CO., LTD., Tokyo 104-0031 (JP)
(72) Inventor: SUZUKI Takanobu, Tokyo 105-0014 (JP)
(74) Representative: Margotti, Herwig Franz
(86) International application number: PCT/JP2017/034864
(87) International publication number: WO 2018/062227

(57) **Abstract**

A synchronization program (54) receives setting information of a first application (31) via a connection program (32) of a cloud server (3) in response to a login operation on a client apparatus (5), generates a database (532) of a second application (53) and synchronizes a display screen (531) of the second application (53) with a display screen (311) of the first application (31). The synchronization program (54) further receives data in a database (312) of the first application (31) via the connection program (32) of the cloud server (3) and synchronizes data in the database (532) of the second application (53) with the data in the database (312) of the first application (31).

## Description

### Technical Field

The present invention relates to a synchronization program executed on a client apparatus connectable to a cloud server and a connection program installed on a cloud server in order to accept a connection from a client apparatus.

### Background Art

In recent years, various cloud services have been developed under such circumstances as advancement of Internet-related techniques and increase in speed and decrease in cost of communication networks. For example, customer management services and sales support services, etc., based on cloud computing have been proposed (see, for example, Patent Literatures 1 and 2).

In conventional cloud services, an application for a cloud service (for example, a customer management service or a sales support service) is installed on a cloud server, and a client apparatus can be provided with the cloud service corresponding to the application by connecting to the cloud server and executing the application on the cloud server.

In conventional cloud services, it is premised that a client apparatus can be provided with a service when the client apparatus is online (can connect to a cloud server) and it is not supposed that a client apparatus is provided with a service when the client apparatus is offline (cannot connect to the cloud server). Therefore, the user needs to perform a data input while being conscious of whether or not the client apparatus in an online state, or even if the client apparatus is in an online state, whether or not the line is stable.

Therefore, in order for a client apparatus to be provided with a cloud service when the client apparatus is offline (cannot connect to a cloud server), a method in which a dedicated application (application for the client apparatus) for using a function of an application installed on the cloud server is installed on the client apparatus is conceivable.

However, in such case, it is necessary to generate a dedicated application (application for the client apparatus) for each of various client services, and furthermore, each time a modification is made to an application on a cloud server, it is necessary to make a modification corresponding to the modification to the dedicated application, which causes the problem of taking a lot of trouble and high costs.

### Citation List

### Patent Literature

Patent Literature 1: Japanese Patent Laid-Open No. 2015-225648
Patent Literature 2: Japanese Patent Laid-Open No. 2010-244227

### Summary of Invention

### Technical Problem

The present invention has been made under the aforementioned circumstances. An object of the present invention is to provide a synchronization program that enables performing a data input without being conscious of whether or not the relevant client apparatus is in an online state and also enables eliminating the need to generate/modify a dedicated application for the client apparatus for using a function of an application on a cloud server.

### Solution to Problem

An aspect of the present invention provides a synchronization program executed by a client apparatus connectable to a cloud server, a cloud service corresponding to a first application being able to be provided to the client apparatus by executing the first application on the cloud server, a connection program for accepting a connection from the client apparatus being installed on the cloud server, a second application for using a function of the first application being installed on the client apparatus, the synchronization program causing the client apparatus to perform request signal transmission processing for transmitting a request signal for requesting setting information of the first application to the connection program of the cloud server in response to a login operation or an application synchronization operation on the client apparatus, setting information reception processing for receiving the setting information of the first application from the connection program of the cloud server as a reply to the request signal, and application synchronization processing for, based on the setting information received from the cloud server, generating a database of the second application and synchronizing a display screen of the second application with a display screen of the first application, the synchronization program further causing the client apparatus to perform data reception synchronization processing for receiving data in a database of the first application via the connection program of the cloud server in response to a login operation on the client apparatus and synchronizing data in the database of the second application with the data in the database of the first application, data update processing for, if a data input is performed on the second application, updating the data in the database of the second application, and data transmission synchronization processing for transmitting the data in the database of the second application to the connection program of the cloud server in response to a data synchronization operation on the client apparatus and synchronizing the data in the database of the first application with the data in the database of the second application.

Another aspect of the present invention provides a connection program installed on a cloud server in order to accept a connection from a client apparatus, a cloud service corresponding to a first application being able to be provided to the client apparatus by executing the first application on the cloud server, the connection program causing the cloud server to perform request signal reception processing for receiving a request signal for requesting setting information of the first application, the request signal being transmitted from the client apparatus in response to a login operation or an application synchronization operation on the client apparatus, and setting information transmission processing for transmitting the setting information of the first application to the client apparatus as a reply to the request signal, a second application for using a function of the first application being installed on the client apparatus, in the client apparatus, application synchronization processing for, based on the setting information received from the cloud server, generating a database of the second application and synchronizing a display screen of the second application with a display screen of the first application being performed, the connection program further causing the cloud server to perform data transmission processing for transmitting data in a database of the first application to the client apparatus in response to a login operation on the client apparatus to synchronize data in the database of the second application with the data in the database of the first application, and data reception processing for, if a data input is performed on the second application and the data in the database of the second application is thereby updated, receiving the data in the database of the second application, the data being transmitted from the client apparatus in response to a data synchronization operation on the client apparatus, in the cloud server, the data in the database of the first application being synchronized with the data in the database of the second application, the data being received from the client apparatus.

As described below, there are other aspects of the present invention. Therefore, this disclosure of the invention is intended to provide some of aspects of the present invention and is not intended to limit the scope of the invention described and claimed herein.

### Brief Description of Drawings

Figure 1 is a schematic diagram of a cloud service system in an embodiment of the present invention.
Figure 2 is a block diagram of a cloud server and an online terminal in an embodiment of the present invention.
Figure 3 is a block diagram of a client apparatus in an embodiment of the present invention.
Figure 4 is a sequence diagram of application synchronization processing and data reception synchronization processing at the time of a login in an embodiment of the present invention.
Figure 5 is a sequence diagram of processing at the time of an application synchronization operation in an embodiment of the present invention.
Figure 6 is a sequence diagram of processing at the time of an online data input in an embodiment of the present invention.
Figure 7 is a sequence diagram of processing at the time of an offline data input in an embodiment of the present invention.

### Description of Embodiment

A detailed description of the present invention will be provided below. However, the below detailed description and the accompanying diagrams are not intended to limit the invention.

A synchronization program according to the present invention is a synchronization program executed by a client apparatus connectable to a cloud server, a cloud service corresponding to a first application being able to be provided to the client apparatus by executing the first application on the cloud server, a connection program for accepting a connection from the client apparatus being installed on the cloud server, a second application for using a function of the first application being installed on the client apparatus, the synchronization program causing the client apparatus to perform request signal transmission processing for transmitting a request signal for requesting setting information of the first application to the connection program of the cloud server in response to a login operation or an application synchronization operation on the client apparatus, setting information reception processing for receiving the setting information of the first application from the connection program of the cloud server as a reply to the request signal, and application synchronization processing for, based on the setting information received from the cloud server, generating a database of the second application and synchronizing a display screen of the second application with a display screen of the first application, the synchronization program further causing the client apparatus to perform data reception synchronization processing for receiving data in a database of the first application via the connection program of the cloud server in response to a login operation on the client apparatus and synchronizing data in the database of the second application with the data in the database of the first application, data update processing for, if a data input is performed on the second application, updating the data in the database of the second application, and data transmission synchronization processing for transmitting the data in the database of the second application to the connection program of the cloud server in response to a data synchronization operation on the client apparatus and synchronizing the data in the database of the first application with the data in the database of the second application.

According to this configuration, upon a login operation or an application synchronization operation being performed on the client apparatus, processing for acquiring the setting information of the first application from the cloud server via the connection program, generating the database of the second application and synchronizing the display screen (application synchronization processing) is performed. A user can use the function of the first application on the client apparatus by executing the second application on the client terminal. In this case, there is no need to generate an application for the client terminal (dedicated application corresponding to the first application) and therefore, there is no need to modify the application for the client terminal (dedicated application corresponding to the first application).

Also, upon a login operation being performed on the client apparatus, processing for receiving data of the first application from the cloud server via the connection program and synchronizing data in the database of the second application (data reception synchronization processing) is performed. Then, upon a data input being performed on the client apparatus (on the second application), data in the database of the second application is updated, and subsequently, upon a data synchronization operation being performed on the client apparatus, processing for transmitting the data to the cloud server and synchronizing the data in the database of the first application (data transmission synchronization processing) is performed. Consequently, the user can perform a data input without being conscious of whether the client apparatus is in an online state or an offline state, or if the client apparatus is in an online state, whether the line is stable or unstable.

Also, in the synchronization program according to the present invention, the setting information may include information on a display item available to the second application, and in the application synchronization processing, a display item of the second application may be synchronized with a display item of the first application using the setting information received from the connection program of the cloud server.

According to this configuration, upon detection of the client apparatus entering an online state, application synchronization processing is performed and a display item (display item on the screen) of the second application is thereby automatically synchronized with a display item (display item on the screen) of the first application. Accordingly, the user can easily use the function of the first application even on the client apparatus.

A connection program according to the present invention is a connection program installed on a cloud server in order to accept a connection from a client apparatus, a cloud service corresponding to a first application being able to be provided to the client apparatus by executing the first application on the cloud server, the connection program causing the cloud server to perform request signal reception processing for receiving a request signal for requesting setting information of the first application, the request signal being transmitted from the client apparatus in response to a login operation or an application synchronization operation on the client apparatus, and setting information transmission processing for transmitting the setting information of the first application to the client apparatus as a reply to the request signal, a second application for using a function of the first application being installed on the client apparatus, in the client apparatus, application synchronization processing for, based on the setting information received from the cloud server, generating a database of the second application and synchronizing a display screen of the second application with a display screen of the first application being performed, the connection program further causing the cloud server to perform data transmission processing for transmitting data in a database of the first application to the client apparatus in response to a login operation on the client apparatus to synchronize data in the database of the second application with the data in the database of the first application, and data reception processing for, if a data input is performed on the second application and the data in the database of the second application is thereby updated, receiving the data in the database of the second application, the data being transmitted from the client apparatus in response to a data synchronization operation on the client apparatus, in the cloud server, the data in the database of the first application being synchronized with the data in the database of the second application, the data being received from the client apparatus.

According to this configuration, upon a login operation or an application synchronization operation being performed on the client apparatus, processing for acquiring the setting information of the first application from the cloud server via the connection program, generating the database of the second application and synchronizing the display screen (application synchronization processing) is performed. A user can use the function of the first application on the client apparatus by executing the second application on the client terminal. In this case, there is no need to generate an application for the client terminal (dedicated application corresponding to the first application) and therefore, there is no need to modify the application for the client terminal (dedicated application corresponding to the first application).

Also, upon a login operation being performed on the client apparatus, processing for receiving data of the first application from the cloud server via the connection program and synchronizing data in the database of the second application (data reception synchronization processing) is performed. Then, upon a data input being performed on the client apparatus (on the second application), data in the database of the second application is updated, and subsequently, upon a data synchronization operation being performed on the client apparatus, processing for transmitting the data to the cloud server and synchronizing the data in the database of the first application (data transmission synchronization processing) is performed. Consequently, the user can perform a data input without being conscious of whether the client apparatus is in an online state or an offline state, or if the client apparatus is in an online state, whether the line is stable or unstable.

Also, in the connection program according to the present invention, the connection program may cause the cloud server to perform processing for setting a display item available to the second application, and in the client apparatus, a display item of the second application may be synchronized with a display item of the first application using the setting information received from the connection program of the cloud server.

According to this configuration, upon detection of the client apparatus entering an online state, application synchronization processing is performed and a display item (display item on the screen) of the second application is thereby automatically synchronized with a display item (display item on the screen) of the first application. Accordingly, the user can easily use the function of the first application even on the client apparatus.

The present invention enables performing a data input without being conscious of whether or not the relevant client apparatus is in an online state and also enables eliminating the need to generate/modify a dedicated application for the client apparatus for using a function of an application on a cloud server.

### (Embodiment)

A synchronization program and a connection program according to an embodiment of the present invention will be described below with reference to the drawings. The present embodiment indicates the case of a synchronization program and a connection program used in a system for providing a cloud service (cloud service system). Functions of the cloud service system according to the present embodiment can be regarded as being provided by the synchronization program and the connection program.

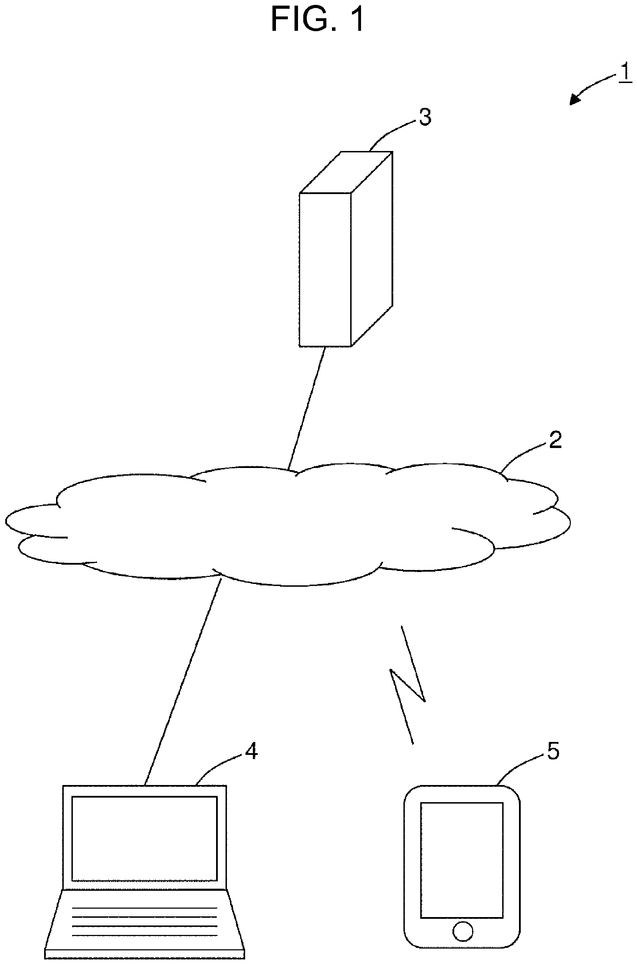

First, a configuration of the cloud service system according to the present embodiment will be described with reference to the drawings. Figure 1 is a schematic diagram of the cloud service system according to the present embodiment. As illustrated in Figure 1, a cloud service system 1 according to the present embodiment includes a cloud server 3, an online terminal 4 and a client terminal 5 (client apparatus) that are connected to a cloud network 2. The cloud server 3 is a server apparatus having various functions for providing a cloud service. The online terminal 4 is a user terminal that is basically constantly used in an online state. The client terminal 5 is a user terminal that is used in both an online state and an offline state. For example, the online terminal 4 is a stationary terminal apparatus and the client terminal 5 is a mobile terminal apparatus.

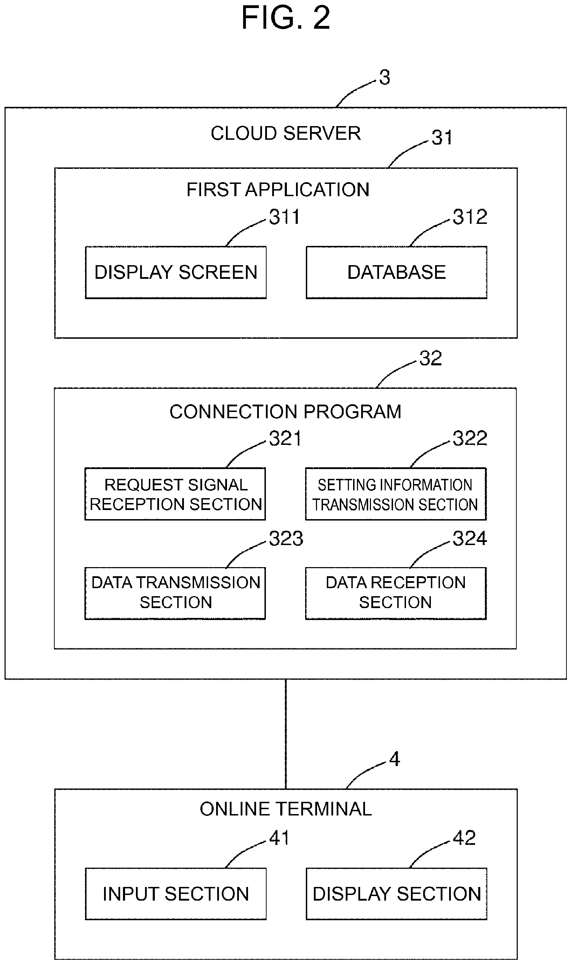

Next, configurations of the cloud server 3 and the online terminal 4 will be described with reference to the drawings. Figure 2 is a block diagram of the cloud server 3 and the online terminal 4 in the present embodiment. As illustrated in Figure 2, a first application 31 and a connection program 32 are installed on the cloud server 3. The online terminal 4 includes an input section 41 and a display section 42. For example, the input section 41 includes, e.g., a keyboard and/or a mouse and the display section 42 includes, e.g., a monitor.

The first application 31 is an application for providing a cloud service. Execution of the first application 31 on the cloud server 3 enables provision of a cloud service corresponding to the first application 31 to the client terminal 5. Note that although Figure 2 illustrates only one first application 31 for ease of description, a number of first applications 31 may be installed on the cloud server 3 according to the number of cloud services. For example, where two cloud services are provided by the cloud server 3, two first applications 31 corresponding to the respective cloud services are installed on the cloud server 3.

The first application 31 includes a display screen 311 and a database 312. The display screen 311 includes a plurality of display items according to the provided cloud service. Which display item, from among the plurality of display items, to be included (which display item to be displayed) on the display screen 311 can arbitrarily be set by a user. Various data necessary for the provided cloud service are stored in the database 312. A plurality of databases 312 may be provided according to the provided cloud service(s).

What information is to be released to the client terminal 5 (to be allowed to be displayed on the client terminal 5) is stored in the cloud server 3 as setting information of the first application 31. The setting information of the first application 31 includes, for example, information regarding which client terminal 5 the display screen 311 and the database 312 to be released to, which display items to be released to the client terminal 5 and which database 312 to be released to the client terminal 5.

The connection program 32 is a program installed on the cloud server 3 in order to accept a connection from the client terminal 5. As a result of the connection program 32 being installed, the cloud server 3 can have functions characteristic of the present invention (a request signal reception section 321, a setting information transmission section 322, a data transmission section 323 and a data reception section 324).

The request signal reception section 321 has a function that receives a request signal (signal for requesting the setting information of the first application 31) transmitted from the client terminal 5 in response to a login operation or an application synchronization operation on the client terminal 5. Also, the setting information transmission section 322 has a function that transmits the setting information of the first application 31 to the client terminal 5 as a reply to a request signal.

The data transmission section 323 has a function that transmits data in the database 312 of the first application 31 to the client terminal 5 in response to a login operation on the client terminal 5. Upon transmission of data in the database 312 of the first application 31 to the client terminal 5, data in a database 532 of a second application 53 (which will be described later) is synchronized with the data in the database 312 of the first application 31.

The data reception section 324 has a function that receives data in the database 532 of the second application 53 (data transmitted from the client terminal 5 in response to a data synchronization operation on the client terminal 5 where data is input on the second application 53 and the data in the database 532 of the second application 53 is thereby updated). In the cloud server 3, the data in the database 312 of the first application 31 is synchronized with the data in the database 532 of the second application 53, the data being received from the client terminal 5.

The connection program 32 also have a function that causes the cloud server 3 to perform processing for setting display items available to the second application 53. In the client terminal 5, display items of the second application 53 are synchronized with display items of the first application 31 using such setting information received from the connection program 32.

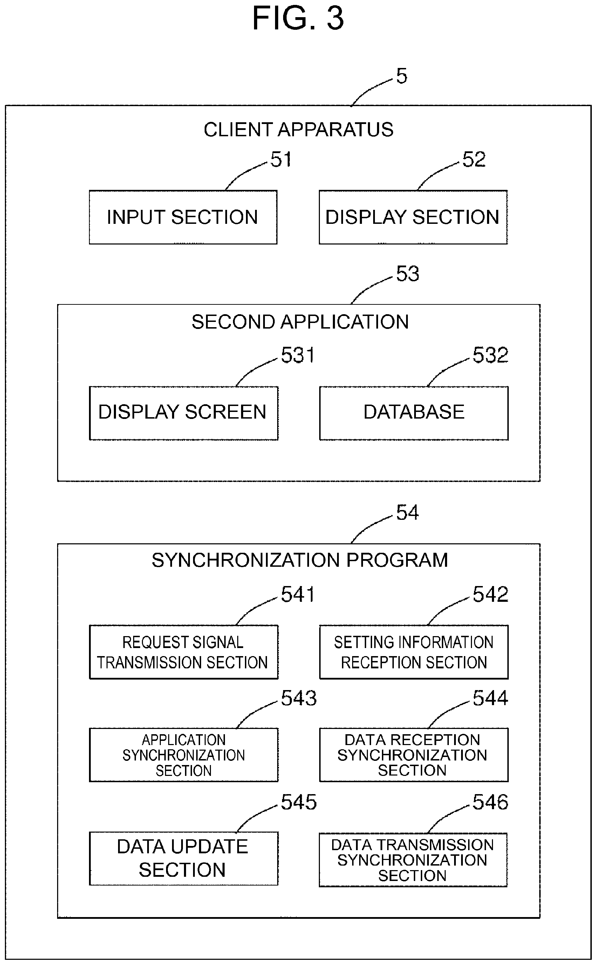

Next, a configuration of the client terminal 5 will be described with reference to the drawings. Figure 3 is a block diagram of the client terminal 5 in the present embodiment. As illustrated in Figure 3, the client terminal 5 includes an input section 51 and a display section 52. For example, the input section 51 and the display section 52 may be configured integrally as a touch panel. Also, the second application 53 and a synchronization program 54 are installed on the client terminal 5.

The second application 53 is an application for using the functions of the first application 31 on the client terminal 5. The second application 53 includes a display screen 531 and the database 532. The display screen 531 may include a plurality of display items according to the provided cloud service and a plurality of databases 532 may be set according to the provided cloud service(s). Which display items are available to the client terminal 5 and which database 532 is available to the client terminal 5 are set according to the setting information received from the cloud server 3.

The synchronization program 54 is a program installed on the client terminal 5 for synchronization (application synchronization and data synchronization) between the first application 31 and the second application 53. As a result of the synchronization program 54 being installed, the client terminal 5 can have functions characteristic of the present invention (a request signal transmission section 541, a setting information reception section 542, an application synchronization section 543, a data reception synchronization section 544, a data update section 545 and a data transmission synchronization section 546).

The request signal transmission section 541 has a function that transmits a request signal for requesting the setting information of the first application 31 to the connection program 32 on the cloud server 3 in response to a login operation or an application synchronization operation on the client terminal 5. Also, the setting information reception section 542 has a function that receives the setting information of the first application 31 from the connection program 32 on the cloud server 3 as a reply to the request signal.
Then, the application synchronization section 543 has a function that generates the database 532 of the second application 53 based on the setting information received from the cloud server 3 and synchronizes the display screen 531 of the second application 53 with the display screen 311 of the first application 31.

Note that the setting information includes information on display items available to the second application 53. Then, the application synchronization section 543 has a function that synchronizes the display items of the second application 53 with the display items of the first application 31 using the setting information received from the connection program 32 on the cloud server 3.

Also, the data reception synchronization section 544 has a function that receives data in the database 312 of the first application 31 via the connection program 32 on the cloud server 3 in response to a login operation on the client terminal 5 and synchronizes data in the database 532 of the second application 53 with the data in the database 312 of the first application 31.

Furthermore, the data update section 545 has a function that where data is input on the second application 53, updates the data in the database 532 of the second application 53. Then, the data transmission synchronization section 546 has a function that transmits the data in the database 532 of the second application 53 to the connection program 32 on the cloud server 3 in response to a data synchronization operation on the client terminal 5 and synchronizes the data in the database 312 of the first application 31 with the data in the database 532 of the second application 53.

Operation of the cloud service system 1 configured as described above will be described with reference to the drawings.

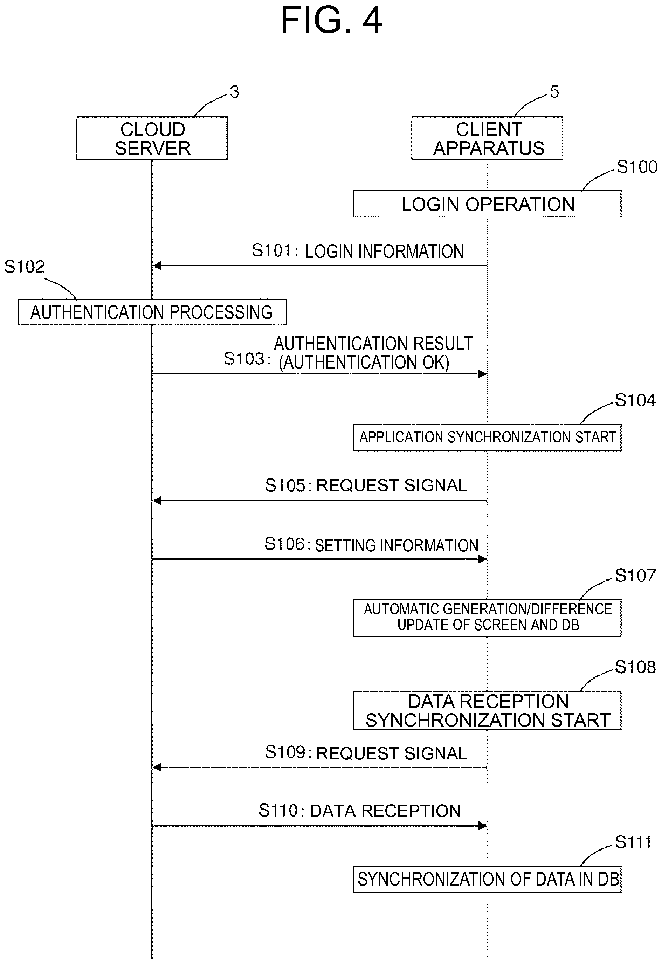

First, processing upon a login from the client terminal 5 (application synchronization processing and data reception synchronization processing) will be described. Figure 4 is a sequence diagram of application synchronization processing and data reception synchronization processing at the time of a login in an embodiment of the present invention.

As illustrated in Figure 4, upon a login operation (for example, an input of a user ID and a password) being performed on the client terminal 5 (S100), login information (for example, the user ID and the password) is transmitted from the client terminal 5 to the cloud server 3 (S101). The cloud server 3 performs processing for authentication of a user of the client terminal 5 based on the login information received from the client terminal 5 (S102) and transmits a result of the authentication to the client apparatus (S103).

If the authentication result is "authentication OK", application synchronization processing is started in the client terminal 5 (S104). In this case, upon transmission of a request signal for requesting the setting information of the first application 31 from the client terminal 5 to the cloud server 3 (connection program 32) (S105), the setting information of the first application 31 is transmitted from the cloud server 3 (connection program 32) to the client terminal 5 as a reply to the request signal (S106).

In the client terminal 5, upon the setting information being received from the cloud server 3, application synchronization processing is performed using the setting information (S107). In the application synchronization processing, based on the setting information received from the cloud server 3, the database 532 of the second application 53 is generated and the display screen 531 of the second application 53 is synchronized with the display screen 311 of the first application 31. For example, in the case of a first login, the display screen 531 and the database 532 of the second application 53 are automatically generated based on the setting information. In the case of a second login onwards, a difference update of the display screen 531 and the database 532 of the second application 53 is performed based on the setting information. Note that where information of display items available to the second application 53 is included in the setting information, in the application synchronization processing, the display items of the second application 53 are synchronized with the display items of the first application 31 using the setting information received from the cloud server 3.

Subsequently, in the client terminal 5, data reception synchronization processing is started (S108). In this case, upon transmission of a request signal for requesting the data in the database 312 of the first application 31 from the client terminal 5 to the cloud server 3 (connection program 32) (S109), data in the database 312 of the first application 31 is transmitted from the cloud server 3 (connection program 32) to the client terminal 5 as a reply to the request signal (S110) and data in the database 532 of the second application 53 is synchronized with the data in the database 312 of the first application 31 (S111). Note that where it is supposed that the client terminal 5 is used offline, necessary data (master data) can be received from the cloud server 3 and stored in the client apparatus 5 even though the data is data other than the data in the database 312 of the first application 31.

The cloud service system 1 may have a custom layout function that enables the user to freely edit layout of the display screen of the client apparatus 5 (display screen 531 of the second application 53). In such case, first, the layout of the display screen 531 of the second application 53 is edited using the online terminal 4 and information of the layout of the display screen 531 (custom layout information) is transmitted to the cloud server 3. In the cloud server 3, for example, the custom layout information is stored together with the setting information. Then, for example, when the client terminal 5 receives the setting information from the cloud server 3 (S107), the client terminal 5 receives the custom layout information from the cloud server 3. Then, settings for the display screen 531 of the second application 53 are made based on the received custom layout information.

Note that the custom layout information and the setting information do not necessarily need to be stored in a same server and may be stored in different servers. Also, a plurality of custom layout information patterns can be generated and stored according to screen resolutions (screen sizes) of the client apparatus 5. In such case, in the client terminal 5, when settings for the display screen 531 of the second application 53 are made based on custom layout information, custom layout information matching the relevant screen resolution (screen size) of the client terminal 5 is automatically selected from the plurality of patterns. Naturally, the user can manually perform selection of custom layout information (selection from the plurality of patterns) on the client apparatus 5.

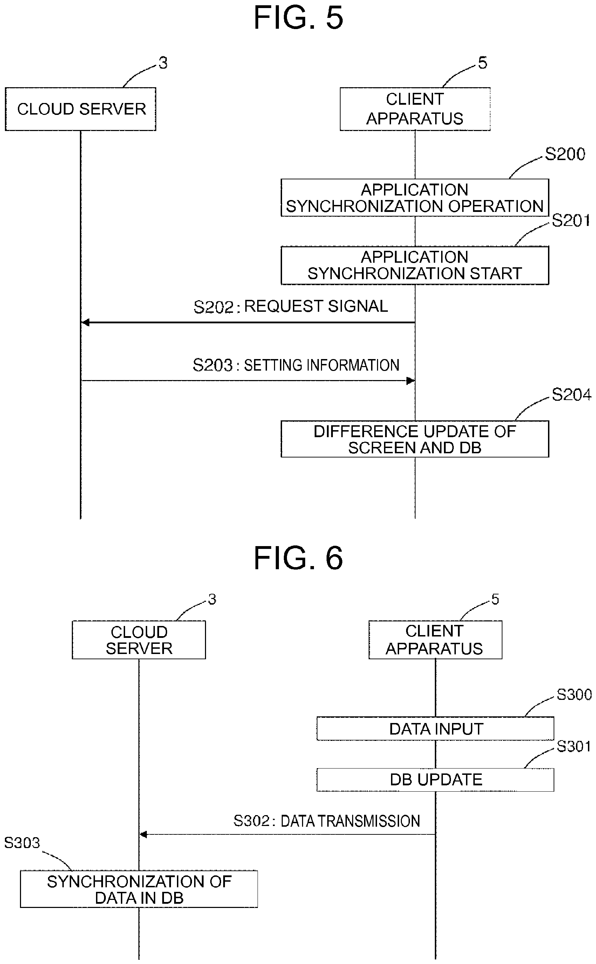

Next, processing upon the user performing an application synchronization operation on the client terminal 5 when the client terminal 5 is in an online state after a login will be described. Figure 5 is a sequence diagram of processing at the time of such application synchronization operation.

As illustrated in Figure 5, upon an application synchronization operation being performed on the client terminal 5 when the client terminal 5 is in an online state after a login (S200), also, application synchronization processing is started in the client terminal 5 (S201). In this case, also, upon transmission of a request signal for requesting the setting information of the first application 31 from the client terminal 5 to the cloud server 3 (connection program 32) (S202), the setting information of the first application 31 is transmitted from the cloud server 3 (connection program 32) to the client terminal 5 as a reply to the request signal (S203). In the client terminal 5, upon the setting information being received from the cloud server 3, application synchronization processing is performed using the setting information. In this case, a difference update of the display screen 531 and the database 532 of the second application 53 is performed based on the setting information (S204).

Next, processing upon the user performing a data input on the client terminal 5 when the client terminal 5 is in an online state will be described. Figure 6 is a sequence diagram of processing at the time of an online data input.

As illustrated in Figure 6, upon the user performing an data input on the client terminal 5 when the client terminal 5 is in an online state (S300), the database 532 of the second application 53 is updated based on the data input (S301) and the data (data in the updated database 532 of the second application 53) is transmitted from the client terminal 5 to the cloud server 3 (S302), and in the client terminal 5, data in the database 312 of the first application 31 is synchronized with the data in the database 532 of the second application 53 (S303).

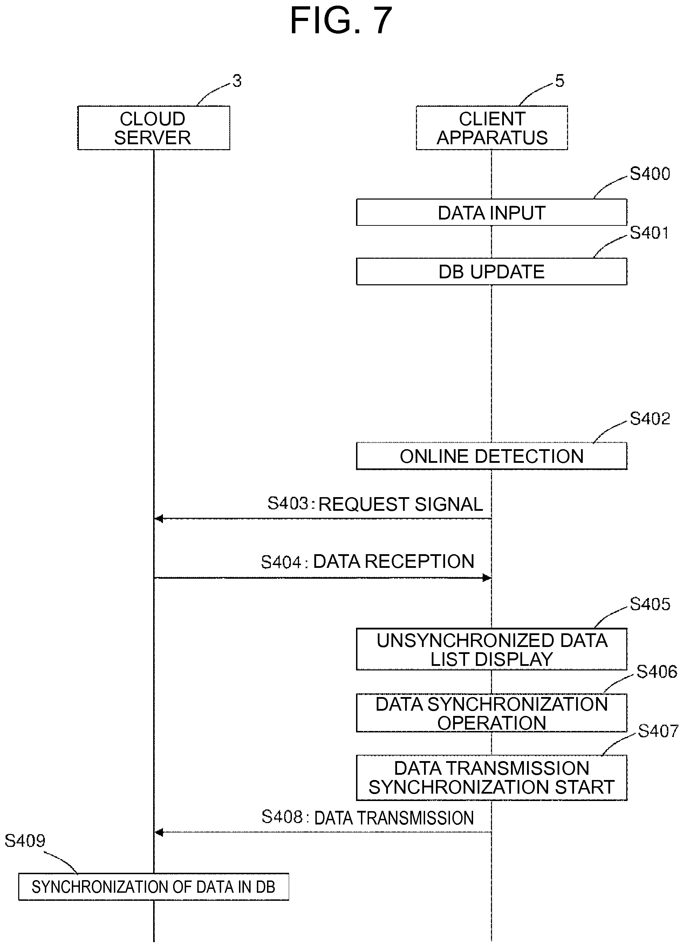

Lastly, processing upon the user performing a data input on the client terminal 5 when the client terminal 5 is in an offline state will be described. Figure 7 is a sequence diagram of processing at the time of an offline data input.

As illustrated in Figure 7, upon the user performing a data input on the client terminal 5 when the client terminal 5 is in an offline state (S400), the database 532 of the second application 53 is updated based on the data input (S401).

Subsequently, upon the client terminal 5 entering an online state and the online state being detected by the client terminal 5 (S402), a request signal for requesting data in the database 312 of the first application 31 is transmitted from the client terminal 5 to the cloud server 3 (connection program 32) (S403) and the data in the database 312 of the first application 31 is transmitted from the cloud server 3 (connection program 32) to the client terminal 5 (S404) as a reply to the request signal. Then, in the client terminal 5, a list of unsynchronized data not synchronized with the data in the database 312 of the first application 31 from among the data in the database 532 of the second application 53 is displayed (S405).

Upon the user that has viewed the unsynchronized data list display performing an operation to select data to be synchronized (data synchronization operation) on the client terminal 5 (S406), data transmission synchronization processing is started (S407). In this case, the data to be synchronized, which has been selected by the user, is transmitted from the client terminal 5 to the cloud server 3 (S408) and in the client terminal 5, the data in the database 312 of the first application 31 is synchronized with the data in the database 532 of the second application 53 (S409).

Here, where a plurality of users perform an input to same data in the database 312 of the first application 31 via different respective client terminals 5, when synchronization of data in the database 312 of the first application 31 and data in the database 532 of the second application 53 with each other is performed in the client terminals 5 (S303, S409), a confirmation screen for confirming which data to be subjected to the synchronization may be displayed to allow each user to select the data.

Also, where the client terminal 5 has a camera function, when the user performs a data input on the client terminal 5 (S300, S400), the database 532 of the second application 53 may be updated with the input data associated with a camera image taken via the camera (S301, S401). Data of the camera image may include information of a position (longitude/latitude) and a time at which the camera image was taken. Also, when the data of the camera image is transmitted from the client terminal 5 to the cloud server 3 (S302, S408), the data may be resized to a data amount suitable for transmission. The resizing is effective particularly for simultaneously transmitting data of a plurality of camera images.

With the cloud service system 1 according to the present embodiment such as above, upon a login operation or an application synchronization operation being performed on the client terminal 5, processing for acquiring the setting information of the first application 31 from the cloud server 3 via the connection program 32, generating the database 532 of the second application 53 and synchronizing the display screen 531 (application synchronization processing) is performed. The user can use the functions of the first application 31 on the client terminal 5 by executing the second application 53 on the client terminal 5. In this case, there is no need to generate an application for the client terminal 5 (dedicated application corresponding to the first application 31) and therefore, there is no need to modify the application for the client terminal 5 (dedicated application corresponding to the first application 31).

Also, according to the present embodiment, upon a login operation being performed on the client terminal 5, processing for receiving data of the first application 31 from the cloud server 3 via the connection program 32 and synchronizing data in the database 532 of the second application 53 (data reception synchronization processing) is performed. Then, upon a data input being performed on the client terminal 5 (on the second application 53), data in the database 532 of the second application 53 is updated, and subsequently, upon a data synchronization operation being performed on the client terminal 5, processing for transmitting the data to the cloud server 3 and synchronizing the data in the database 312 of the first application 31 (data transmission synchronization processing) is performed. Consequently, the user can perform a data input without being conscious of whether the client terminal 5 is in an online state or an offline state, or if the client terminal 5 is in an online state, whether the line is stable or unstable.

Also, in the present embodiment, upon detection of the client terminal 5 entering an online state, application synchronization processing is performed and display items (display items on the screen) of the second application 53 is thereby automatically synchronized with display items (display items on the screen) of the first application 31. Accordingly, the user can easily use the functions of the first application 31 even on the client terminal 5.

Although an embodiment of the present invention has been described above as an example, the scope of the present invention is not limited to such embodiment and modification and alterations can be made according to the purpose within the scope stated in the claims.

Although a preferred embodiment of the present invention that is conceivable at the current point of time has been described above, it should be understood that various alterations of the present embodiment are possible and the accompanying claims are intended to include all of such alterations within the true spirit and scope of the present invention.

### Industrial Applicability

As described above, a synchronization program and a connection program according to the present invention provide the effect of enabling performing a data input without being conscious of whether or not the relevant client apparatus is in an online state and also enabling eliminating the need to generate/modify a dedicated application for the client apparatus for using a function of an application on a cloud server, are used for provision of various cloud services and thus useful.

### Reference Signs List

- 1: cloud service system
- 2: cloud network
- 3: cloud server
- 4: online terminal
- 5: client terminal (client apparatus)
- 31: first application
- 311: display screen
- 322: database
- 32: connection program
- 321: request signal reception section
- 322: setting information transmission section
- 323: data transmission section
- 324: data reception section
- 41: input section
- 42: display section
- 51: input section
- 52: display section
- 53: second application
- 531: display screen
- 532: database
- 54: synchronization program
- 541: request signal transmission section
- 542: setting information reception section
- 543: application synchronization section
- 544: data reception synchronization section
- 545: data update section
- 546: data transmission synchronization section

## Claims

1. A synchronization program executed by a client apparatus connectable to a cloud server,
a cloud service corresponding to a first application being able to be provided to the client apparatus by executing the first application on the cloud server,
a connection program for accepting a connection from the client apparatus being installed on the cloud server,
a second application for using a function of the first application being installed on the client apparatus,
the synchronization program causing the client apparatus to perform
request signal transmission processing for transmitting a request signal for requesting setting information of the first application to the connection program of the cloud server in response to a login operation or an application synchronization operation on the client apparatus,
setting information reception processing for receiving the setting information of the first application from the connection program of the cloud server as a reply to the request signal, and
application synchronization processing for, based on the setting information received from the cloud server, generating a database of the second application and synchronizing a display screen of the second application with a display screen of the first application,
the synchronization program further causing the client apparatus to perform
data reception synchronization processing for receiving data in a database of the first application via the connection program of the cloud server in response to a login operation on the client apparatus and synchronizing data in the database of the second application with the data in the database of the first application,
data update processing for, if a data input is performed on the second application, updating the data in the database of the second application, and
data transmission synchronization processing for transmitting the data in the database of the second application to the connection program of the cloud server in response to a data synchronization operation on the client apparatus and synchronizing the data in the database of the first application with the data in the database of the second application.

2. The synchronization program according to claim 1, wherein:
the setting information includes information on a display item available to the second application; and
in the application synchronization processing, a display item of the second application is synchronized with a display item of the first application using the setting information received from the connection program of the cloud server.

3. A connection program installed on a cloud server in order to accept a connection from a client apparatus,
a cloud service corresponding to a first application being able to be provided to the client apparatus by executing the first application on the cloud server,
the connection program causing the cloud server to perform
request signal reception processing for receiving a request signal for requesting setting information of the first application, the request signal being transmitted from the client apparatus in response to a login operation or an application synchronization operation on the client apparatus, and
setting information transmission processing for transmitting the setting information of the first application to the client apparatus as a reply to the request signal,
a second application for using a function of the first application being installed on the client apparatus,
in the client apparatus, application synchronization processing for, based on the setting information received from the cloud server, generating a database of the second application and synchronizing a display screen of the second application with a display screen of the first application being performed,
the connection program further causing the cloud server to perform
data transmission processing for transmitting data in a database of the first application to the client apparatus in response to a login operation on the client apparatus to synchronize data in the database of the second application with the data in the database of the first application, and
data reception processing for, if a data input is performed on the second application and the data in the database of the second application is thereby updated, receiving the data in the database of the second application, the data being transmitted from the client apparatus in response to a data synchronization operation on the client apparatus,
in the cloud server, the data in the database of the first application being synchronized with the data in the database of the second application, the data being received from the client apparatus.

4. The connection program according to claim 3, wherein:
the connection program causes the cloud server to perform processing for setting a display item available to the second application; and
in the client apparatus, a display item of the second application is synchronized with a display item of the first application using the setting information received from the connection program of the cloud server.
